# FASCICULE DE BREVET EUROPEEN

(11) **EP 1 328 413 B1**
(45) Date de publication et mention de la délivrance du brevet: **10.01.2007**
(21) Numéro de dépôt: 01976426.5
(22) Date de dépôt: 12.10.2001
(51) Int. Cl.: B60J 5/04, B62D 25/04

(54) **DISPOSITIF DE RENFORCEMENT D'UN VEHICULE NOTAMMENT EQUIPE D'UN TOIT RETRACTABLE**
VERSTÄRKUNGSVORRICHTUNG FÜR KRAFTFAHRZEUGE, INSBESONDERE AUSGESTATTET MIT EINEM FALTDACH
DEVICE FOR REINFORCING A VEHICLE IN PARTICULAR EQUIPPED WITH A RETRACTABLE ROOF

(30) Priorité: 27.10.2000 FR 0013842
(43) Date de publication de la demande: 23.07.2003
(73) Titulaire: Société Européenne de Brevets Automobiles - SEBA, 75011 Paris (FR)
(72) Inventeur: QUEVEAU, Gérard, F-79140 Le Pin (FR); GUILLEZ, Jean-Marc, F-79140 Cirières (FR)
(74) Mandataire: Geismar, Thierry
(86) Numéro de dépôt international: PCT/FR2001/003173
(87) Numéro de publication internationale: WO 2002/034557

(56) Documents cités:
- EP-A- 0 472 284
- EP-A- 1 043 181
- DE-A- 4 240 416
- DE-A- 19 828 444
- US-A- 5 806 917
- US-A- 5 895 088

## Description

La présente invention concerne un dispositif pour renforcer un véhicule, notamment équipé d'un toit rétractable.

On sait que les véhicules du type cabriolet ou les véhicules à toit rétractable lorsque les éléments du toit sont rangés dans le coffre du véhicule présentent une rigidité à la flexion et à la torsion, ainsi qu'une résistance aux chocs latéraux réduite par rapport à celles d'un véhicule à toit rigide non rétractable.

En effet, le toit rigide, ainsi que les montants latéraux participent significativement à la rigidité de la carrosserie.

Le problème ci-dessus se pose surtout dans le cas de véhicules à quatre portes équipés d'un toit rétractable.

En effet, dans ces véhicules les longerons inférieurs du châssis présentent une longueur plus importante que dans les véhicules à deux portes et de ce fait, ces longerons n'assurent plus une tenue suffisante en torsion et en flexion.

Le but de la présente invention est de remédier aux inconvénients ci-dessus.

Il est connu des documents DE 1982844 et EP 0472284 des dispositifs de renforcement d'un véhicule selon le préambule de la revendication 1. Cependant, ces dispositifs de renforcement ne sont pas constitués par un anneau entourant l'habitacle du véhicule.

Suivant l'invention, le dispositif de renforcement d'un véhicule, notamment équipé d'un toit rétractable, est constitué par au moins un élément rigide fixé à une partie fixe de la carrosserie et par au moins un élément mobile intégré à la partie supérieure d'au moins une porte du véhicule, cet élément mobile étant situé dans le prolongement de l'élément fixe lorsque la porte est fermée, chaque élément mobile comportant à son extrémité adjacente à l'élément mobile des moyens de verrouillage mobiles entre une position de déverrouillage et une position de verrouillage dans laquelle l'élément mobile est rigidement lié à l'élément fixe et forment ensemble un barreau de renforcement dont la rigidité est uniformément répartie sur toute la longueur dudit barreau.

Le dispositif de renforcement est constitué par un anneau rigide entourant l'habitacle du véhicule, cet anneau rigide étant constitué par des éléments fixés aux parties fixes de la carrosserie et par des éléments mobiles intégrés dans la partie supérieure des portes du véhicule, ces éléments mobiles étant situés dans le prolongement des éléments fixes lorsque les portes sont fermées, chaque élément mobile comportant à chacune de ses extrémités des moyens de verrouillage mobiles entre une position de déverrouillage et une position de verrouillage dans laquelle les éléments mobiles sont rigidement liés aux éléments fixes et formant ensemble un anneau dont la rigidité est uniformément répartie tout autour de l'habitacle du véhicule.

De préférence, dans le cas d'un véhicule à quatre portes, l'anneau comprend un élément avant fixe en forme d'arceau, un élément arrière fixe en forme d'arceau, un élément latéral fixe s'étendant de chaque côté du véhicule et compris entre deux éléments mobiles intégrés dans les deux portes, chacun de ces deux éléments étant adjacent à une extrémité d'un élément en forme d'arceau.

D'autres particularités et avantages de l'invention apparaîtront encore dans la description ci-après.

Aux dessins annexés, donnés à titre d'exemples non imitatifs :
- la figure 1 est une vue schématique en élévation et en coupe longitudinale partielle d'un véhicule équipé d'un dispositif de renforcement selon l'invention ;
- la figure 2 est une demi-vue en coupe suivant le plan II-II de la figure 1;
- la figure 3 est une vue en coupe, à échelle agrandie d'un détail A de la figure 1, montrant deux éléments en position verrouillée ;
- la figure 4 est une vue suivant la flèche F de la figure 3 ;
- la figure 5 est une vue analogue à la figure 3, montrant les deux éléments en position déverrouillée ;
- la figure 6 est une vue schématique en plan, montrant le moteur et l'arbre de commande du coulissement du coulisseau de verrouillage des éléments ;
- la figure 7 est une vue en coupe longitudinale partielle d'un élément, selon une variante de réalisation de l'invention.
- la figure 8 est une vue analogue à la figure 1, montrant une version plus performante du dispositif de renforcement selon l'invention ;
- la figure 9 est une vue analogue aux figures 1 et 8, montrant un autre mode de réalisation de l'invention.

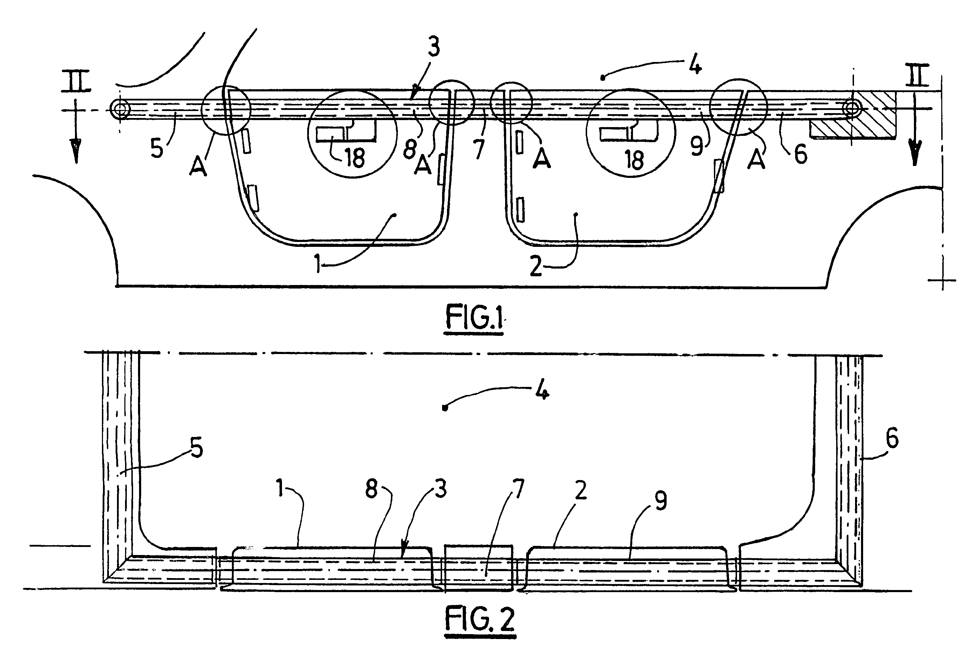

Les figures 1 et 2 représentent un dispositif de renforcement d'un véhicule à quatre portes 1, 2, notamment équipé d'un toit rétractable (non représenté).

Conformément à l'invention, ce dispositif de renforcement est constitué par un anneau rigide 3 entourant l'habitacle 4 du véhicule : Cet anneau rigide 3 est constitué par des éléments 5, 6, 7 fixés aux parties fixes de la carrosserie et par des éléments mobiles 8, 9 intégrés dans la partie supérieure des portes 1, 2 du véhicule.

Les éléments mobiles 8, 9 sont situés dans le prolongement des éléments fixes 5, 6, 7, lorsque les portes 1, 2 sont fermées.

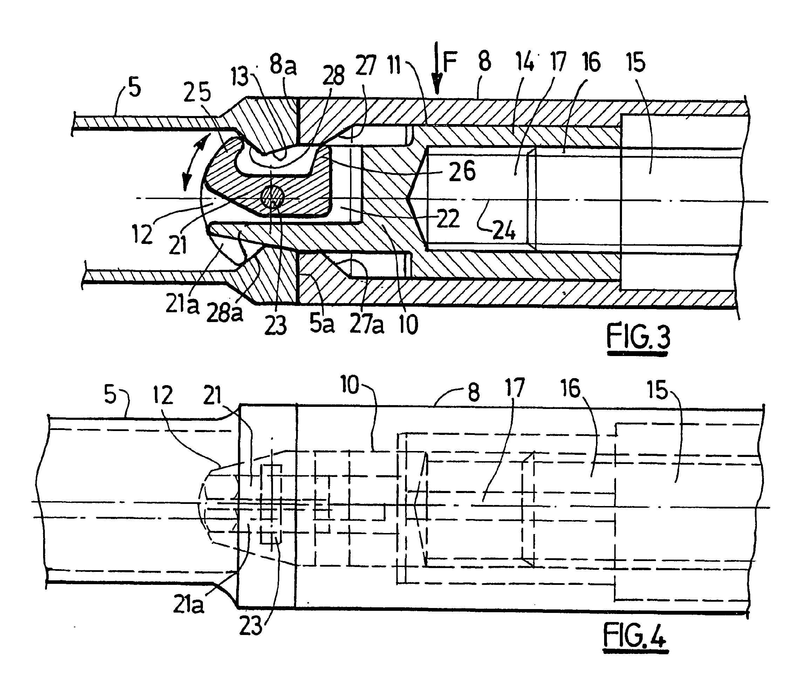

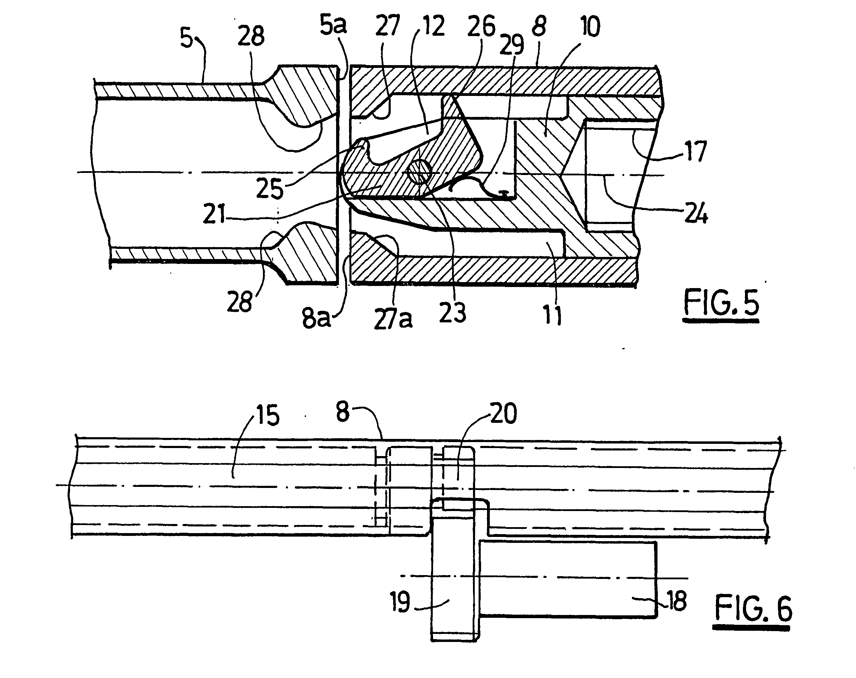

Chaque élément mobile 8, 9 comporte à chacune de ses extrémités des moyens de verrouillage mobiles entre une position de déverrouillage (voir figure 5) et une position de verrouillage (voir figure 3) dans laquelle les éléments mobiles 8, 9 sont rigidement liés aux éléments fixes 5, 6, 7 et forment ensemble un anneau dont la rigidité est uniformément répartie tout autour de l'habitacle 4 du véhicule.

Les moyens de verrouillage seront décrits plus loin plus en détail.

Dans l'exemple représenté, l'anneau 3 comprend un élément avant fixe 5 en forme d'arceau, un élément arrière fixe 6 en forme d'arceau, un élément latéral fixe 7 s'étendant de chaque côté du véhicule et compris entre deux éléments mobiles 8, 9 intégrés dans les deux portes 1, 2. Chacun de ces deux éléments mobiles 8, 9 est adjacent à une extrémité d'un élément fixe 5, 6 en forme d'arceau.

Comme illustré par la figure 3, les moyens de verrouillage comprennent des moyens permettant de centrer les éléments tels que 8 et 5 l'un par rapport à l'autre et des moyens pour serrer les faces terminales 8a, 5a des éléments 8, 5 l'une à l'autre.

La figure 3 montre en outre que les éléments 8, 5 sont tubulaires.

Dans l'exemple représenté sur les figures 3, 4 et 5, les moyens de verrouillage comprennent un coulisseau 10 monté coulissant dans un alésage 11 réalisé dans l'élément 8 et portant à son extrémité un cône 12 faisant saillie en position du verrouillage de la face terminale 8a de l'élément 8 pour s'engager dans un évidement complémentaire 13 réalisé dans la face terminale 5a de l'autre élément 5.

L'alésage 11 comporte au moins une rainure axiale dans laquelle est engagée une clavette 14 solidaire du coulisseau 10 pour guider axialement le coulissement de ce coulisseau 10 et le bloquer en rotation.

On voit d'autre part sur la figure 3, que le coulissement du coulisseau 10 est commandé par un arbre 15 s'étendant axialement dans l'élément 8 et présentant une extrémité filetée 16 engagée dans un alésage taraudé 17 pratiqué dans le coulisseau 10.

Comme montré par la figure 6, l'arbre 15 est accouplé à un moteur électrique 18 pour l'entraîner en rotation. A cet effet, l'arbre de sortie du moteur 18 comporte un pignon 19 engrené avec un pignon 20 relié à l'arbre 15.

Par ailleurs, comme également montré par la figure 3, les moyens de verrouillage comprennent en outre, au moins une mâchoire de serrage 21 montée pivotante dans un logement 22 du cône 12 suivant un axe 23 perpendiculaire à l'axe 24 du coulisseau 10. La mâchoire 21 comporte à chaque extrémité une portée 25, 26 en saillie dans une direction opposée à l'axe 24 du coulisseau 10.

Chaque élément 8, 5 comporte en son intérieur près de sa face terminale 8a, 5a une rampe inclinée 27, 28. Ces rampes inclinées 27, 28 coopèrent avec les portées en saillie 25, 26 de la mâchoire 21, de telle sorte que lors de l'engagement du cône 12 dans l'évidement 13 de l'élément adjacent 5, l'appui de la portée 26 située à l'arrière de la mâchoire 21 sur la rampe 27 correspondante provoque le pivotement de la mâchoire 21 et l'appui de la portée avant 25 de celle-ci contre la rampe 28 de l'élément adjacent 5.

De préférence, comme indiqué sur les figures 3 et 4, le dispositif comprend une seconde mâchoire 21 a montée sur le même axe 23 et coopérant avec des rampes inclinées 27a, 28a disposées symétriquement par rapport à celles coopérant avec la première mâchoire 21.

Comme illustré par la figure 5, chaque mâchoire telle que 21 coopère avec un ressort 29 tendant à faire pivoter la mâchoire 21 vers une position opposée aux rampes 27, 28.

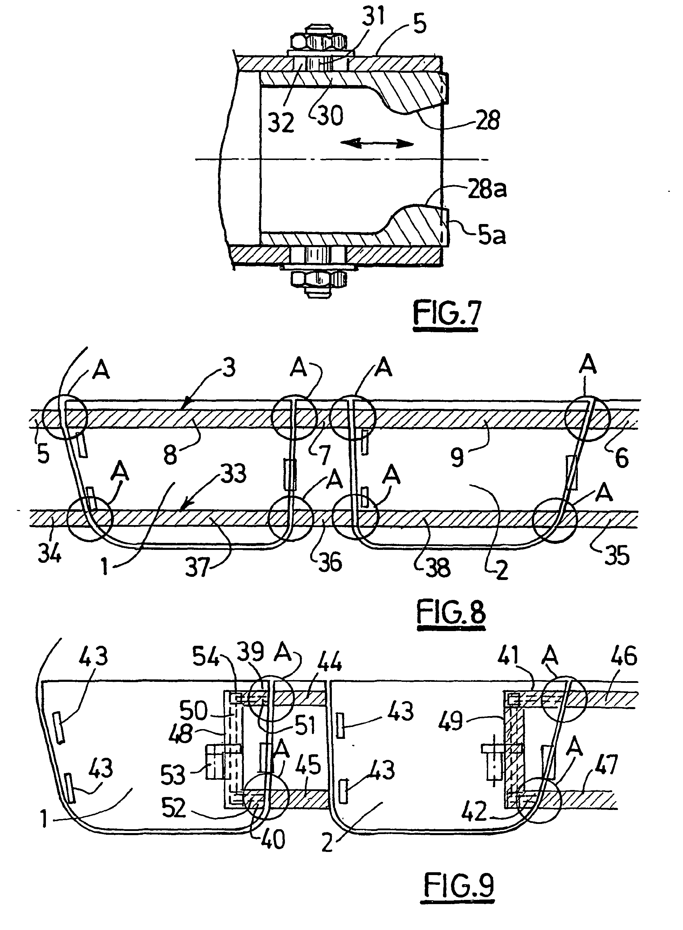

Dans la version illustrée par la figure 7, l'élément 5 comporte à son extrémité un manchon 30 fixé d'une manière réglable à l'intérieur de l'élément pour pouvoir ajuster axialement la position de sa face terminale 5a. La face interne du manchon 30 porte les rampes inclinées.

Dans cet exemple, la fixation réglable est assurée par des vis 31 engagées dans des ouvertures oblongues 32.

On va maintenant expliquer le fonctionnement du dispositif que l'on vient de décrire.

Dans la position déverrouillée représentée par la figure 5, le cône 12 est engagé à l'intérieur de l'alésage 11 de l'élément 8 et la mâchoire 21 est en position inactive, la portée arrière 26 prenant appui sur la face interne de l'élément 8.
Dans cette position, la porte du véhicule qui intègre l'élément de renforcement 8 peut être ouverte.

Pour verrouiller l'élément 8 à l'élément 5, on met en route le moteur 18. Celui-ci entraîne en rotation l'arbre 15 dont l'extrémité filetée 16 va se dévisser du taraudage 17 du coulisseau 10, ce qui provoque la translation du coulisseau 10 vers l'avant.

Cette translation provoque l'engagement du cône 12 dans l'évidement 13 de l'élément 5. Avant la fin de course du cône 12, la portée arrière 26 de la mâchoire 21 prend appui sur la rampe 27, ce qui provoque le basculement de la mâchoire 21 autour de l'axe 23 et l'appui en fin de course, de la portée avant 25 sur la rampe 28 de l'élément 5.

En fin de course, le cône 12 est complètement engagé dans l'évidement 13 de l'élément 5, ce qui assure un parfait centrage de l'élément 8 par rapport à l'élément 5.

De plus, l'appui des portées 25 des mâchoires 21 et 21 a sur les rampes inclinées 28 et 28a, non seulement verrouille ensemble les éléments 8 et 5, mais serre les faces terminales 8a et 5a l'une contre l'autre.

Ce serrage des éléments l'un contre l'autre sur toute la périphérie du véhicule, a pour effet que l'anneau 3 se comporte comme un anneau rigide d'une seule pièce qui augmente considérablement la résistance du véhicule à la flexion, à la torsion et aux chocs latéraux.

La version plus performante du dispositif de renforcement représenté dans la figure 8, comprend un second anneau rigide 33 parallèle au premier anneau 3, composé d'éléments fixes 34, 35, 36 et mobiles 37, 38.

Les éléments mobiles 37, 38 sont intégrés dans la partie inférieure de chaque porte 1, 2 et reliés aux éléments fixes par des moyens de verrouillage identiques à ceux qui relient les éléments du premier anneau 3.

Le dispositif ci-dessus confère au véhicule une excellente résistance aux chocs latéraux.

Dans la version illustrée par la figure 9, chaque porte 1, 2 comporte un élément rigide supérieur 39, 41 et un élément rigide inférieur 40, 42 s'étendant horizontalement à partir du bord de la porte opposé aux charnières 43 de celle-ci.

Les deux éléments 39, 40 et 41, 42 sont situés dans le prolongement de deux éléments rigides 44, 45 ; 46, 47 fixés à une partie fixe de la carrosserie. Par ailleurs, les deux éléments 39, 40 ; 41, 42 intégrés dans la porte 1, 2 sont reliés entre eux par un élément rigide vertical 48, 49.

On voit en outre sur la figure 9, que les moyens assurant le verrouillage entre les éléments mobiles 39, 40 ; 41, 42 et fixes 44, 45 ; 46, 47 comprennent des arbres 50, 51, 52 montés en rotation dans les éléments intégrés dans la porte 1, 2 et entraînés par un moteur 53.

L'arbre 50 s'étendant dans l'élément vertical 48, 49 est relié par des renvois d'angle 54 aux arbres 51, 52 s'étendant dans les deux autres éléments.

Le dispositif de renforcement illustré par la figure 9 est moins performant que ceux représentés sur les figures 1 et 8. Cependant, dans le cas de la figure 9, le renforcement se situe dans la zone centrale sensible du véhicule, les charnières 43 offrant quant à elles une rigidité pouvant suffire.

Bien entendu, l'invention n'est pas limitée aux exemples que l'on vient de décrire et on peut apporter à ceux-ci de nombreuses modifications sans sortir du cadre de l'invention, qui est défini par les revendications suivantes.

## Revendications

1. Dispositif de renforcement d'un véhicule notamment équipé d'un toit rétractable constitué par des élément rigides (5, 6, 7) fixés aux parties fixes de la carrosserie et par des éléments mobiles (8, 9) intégrés dans la partie supérieure des portes (1, 2) du véhicule, ces éléments mobiles (8, 9) étant situés dans le prolongement des éléments fixes (5, 6, 7) lorsque les portes (1, 2) sont fermées, chaque élément mobile (8, 9) comportant à chacune de ses extrémités des moyens de verrouillage mobiles entre une position de déverrouillage et une position de verrouillage dans laquelle les éléments mobiles (8) sont rigidement liés aux éléments fixes (5) et forment ensemble un barreau de renforcement s'étendant sur toute la longueur de l'habitacle, dont la rigidité est uniformément répartie sur toute la longueur dudit barreau, ledit dispositif étant **caractérisé en ce que** lorsque les moyens de verrouillage sont dans leur position de verrouillage les éléments mobiles (8, 9) et les éléments fixes (5, 6, 7) forment ensemble un anneau rigide (3) entourant l'habitacle du véhicule et dont la rigidité est uniformément répartie tout autour de l'habitacle (4) du véhicule.

2. Dispositif conforme à la revendication 1, pour un véhicule à quatre portes, **caractérisé en ce que** l'anneau (3) comprend un élément avant fixe (5) en forme d'arceau, un élément arrière fixe (6) en forme d'arceau, un élément latéral fixe (7) s'étendant de chaque côté du véhicule et compris entre deux éléments mobiles (8,9) intégrés dans les deux portes (1, 2), chacun de ces deux éléments (8, 9) étant adjacent à une extrémité d'un élément en forme d'arceau (5, 6).

3. Dispositif conforme à l'une des revendications 1 ou 2, **caractérisé en ce que** les moyens de verrouillage comprennent des moyens permettant de centrer les éléments (5,8 ; 7,9, 6) les uns par rapport aux autres et des moyens pour serrer les faces terminales (5a, 8a) des éléments l'une contre l'autre.

4. Dispositif conforme à l'une des revendications 1 à 3, **caractérisé en ce que** lesdits éléments sont tubulaires.

5. Dispositif conforme à l'une des revendications 3 ou 4, **caractérisé en ce que** les moyens de verrouillage comprennent un coulisseau (10) monté coulissant dans un alésage (11) réalisé dans l'un (8) des éléments et portant à son extrémité un cône (12) faisant saillie en position de verrouillage de la face terminale (8a) dudit élément (8) pour pouvoir s'engager dans un évidement complémentaire (13) réalisé dans la face terminale (5a) de l'autre élément (5).

6. Dispositif conforme à la revendication 5, **caractérisé en ce que** ledit alésage (11) comporte au moins une rainure axiale dans laquelle est engagée une clavette (14) solidaire du coulisseau (10) pour guider axialement le coulissement de ce coulisseau (10) et le bloquer en rotation.

7. Dispositif conforme à l'une des revendications 5 ou 6, **caractérisé en ce que** le coulissement du coulisseau (10) est commandé par un arbre (15) s'étendant axialement dans l'élément (8) et présentant une extrémité filetée (16) engagée dans un taraudage (17) pratiqué dans le coulisseau (10), ledit arbre (15) étant accouplé à un moteur électrique (18) pour l'entraîner en rotation.

8. Dispositif conforme à l'une des revendications 4 à 7, **caractérisé en ce que** les moyens de verrouillage comprennent en outre, au moins une mâchoire de serrage (21) montée pivotante dans un logement (22) dudit cône (12) suivant un axe (23) perpendiculaire à l'axe (24) du coulisseau (10), ladite mâchoire (21) comportant à chaque extrémité une portée en saillie (25, 26) dans une direction opposée à l'axe (24) du coulisseau (10), chaque élément (8, 5) comportant en son intérieur près de sa face terminale (8a, 5a) une rampe inclinée (27, 28), lesdites rampes inclinées coopérant avec lesdites portées (25, 26) en saillie de ladite mâchoire (21) de telle sorte que lors de l'engagement du cône (12) dans l'évidement (13) de l'élément (5) adjacent, l'appui de la portée (26) située à l'arrière de la mâchoire (21) sur la rampe (27) correspondante provoque le pivotement de la mâchoire (21) et l'appui de la portée avant (25) de celle-ci contre la rampe (28) de l'élément (5) adjacent.

9. Dispositif conforme à la revendication 8, **caractérisé en ce qu'**il comprend une seconde mâchoire(21a) montée sur le même axe (23) et coopérant avec des rampes inclinées (27a, 28a) disposées symétriquement par rapport à celles coopérant avec la première mâchoire (21).

10. Dispositif conforme à la revendication 9, **caractérisé en ce que** chaque mâchoire (21, 21a) coopère avec un ressort (29) tendant à faire pivoter la mâchoire vers une position opposée auxdites rampes.

11. Dispositif conforme à l'une des revendications 9 ou 10, **caractérisé en ce que** l'un (5) des éléments comporte à son extrémité un manchon (30) fixé d'une manière réglable à l'intérieur dudit élément (5) pour pouvoir ajuster axialement la position de sa face terminale (5a), la face interne dudit manchon portant lesdites rampes inclinées (28,28a).

12. Dispositif conforme à l'une des revendications 1 à 11, **caractérisé en ce qu'**il comprend un second anneau rigide (33) parallèle au premier anneau (3) composé d'éléments fixes (34,35, 36) et mobiles (37,38), les éléments mobiles (37,38) étant intégrés dans la partie inférieure de chaque porte (1,2) et reliés aux éléments fixes par des moyens de verrouillage identiques à ceux qui relient les éléments du premier anneau (3).

## Claims

1. Device for reinforcing a vehicle in particular equipped with a retractable roof made up of rigid elements (5, 6, 7) fixed to the fixed parts of the chassis and of mobile elements (8, 9) built into the top of the doors (1, 2) of the vehicle, these mobile elements (8, 9) being placed as an extension of the fixed elements (5, 6, 7) when the doors (1, 2) are closed, each mobile element (8, 9) comprising, on each of its ends, locking means which are mobile between an unlocked position and a locked position in which the mobile elements (8) are rigidly linked to the fixed elements (5) and together form a strengthening bar that extends over the entire length of the passenger compartment, the rigidity of which is evenly distributed over the entire length of said bar, said device being **characterised in that**, when the locking means are in their locked position, the mobile elements (8, 9) and the fixed elements (5, 6, 7) together form a rigid ring (3) surrounding the passenger compartment of the vehicle, the rigidity of which is evenly distributed around the passenger compartment (4) of the vehicle.

2. Device according to claim 1, for a four-door vehicle, **characterised in that** the ring (3) comprises a fixed front element (5) forming a roll bar, a fixed rear element (6) forming a roll bar, a fixed lateral element (7) extending on either side of the vehicle and being comprised between two mobile elements (8, 9) built into the two doors (1, 2) each of these two elements (8, 9) being adjacent to one end of an element forming a roll bar (5, 6).

3. Device according to either one of the claims 1 or 2, **characterised in that** the locking means comprise means that make it possible to centre the elements (5, 8; 7, 9, 6) with regard to one another and means for tightening the end faces (5a, 8a) of the elements against each other.

4. Device according to one of the claims from 1 to 3, **characterised in that** said elements are tubular.

5. Device according to either one of the claims 3 or 4, **characterised in that** the locking means comprise a sliding nut (10) mounted such as to slide in a bore (11) made in one (8) of the elements and supporting at its end a cone (12) that projects in the locked position of the end face (8a) of said element (8) such as to become inserted in a complementary recess (13) made in the end face (5a) of the other element (5).

6. Device according to claim 5, **characterised in that** said bore (11) comprises at least one axial groove in which a key (14) solidly attached to the sliding nut (10) is inserted in order to guide the sliding of the sliding nut (10) axially and to block its rotation.

7. Device according to either one of the claims 5 or 6, **characterised in that** the sliding of the sliding nut (10) is controlled by a shaft (15) that extends axially inside the element (8) and has a threaded end (16) inserted in a threaded hole (17) made in the sliding nut (10), said shaft (15) being coupled to an electric motor (18) which drives its rotation.

8. Device according to one of the claims from 4 to 7, **characterised in that** the locking means additionally comprise at least one clamping jaw (21) mounted such as to pivot in a housing (22) of said cone (12) along an axis (23) that is perpendicular to the axis (24) of the sliding nut (10), said jaw (21) comprising on each end a seat (25, 26) that projects in the opposite direction to the axis (24) of the sliding nut (10), each element (8, 5) comprising a tilted ramp (27, 28) on its inside near its end face (8a, 5a), said tilted ramps cooperating with said seats (25, 26) which project from said jaw (21) so that during the insertion of the cone (12) in the recess (13) of the adjacent element (5), the resting of the seat (26) located to the rear of the jaw (21) on the relevant ramp (27) causes the pivoting of the jaw (21) and the resting of the front seat (25) of the latter against the ramp (28) of the adjacent element (5).

9. Device according to claim 8, **characterised in that** it comprises a second jaw (21a) mounted on the same axis (23) and cooperating with tilted ramps (27a, 28a) arranged symmetrically with regard to those that cooperate with the first jaw (21).

10. Device according to claim 9, **characterised in that** each jaw (21, 21a) cooperates with a spring (29) that tends to cause the jaw to pivot towards a position that is opposite said ramps.

11. Device according to either one of the claims 9 or 10, **characterised in that** one (5) of the elements comprises at its end a sleeve (30) fixed in an adjustable manner inside said element (5) in order to make it possible to adjust the axial position of its end face (5a), the inner face of said sleeve containing said tilted ramps (28, 28a).

12. Device according to one of the claims from 1 to 11, **characterised in that** it comprises a second rigid ring (33) which is parallel to the first ring (3) made up of fixed (34, 35, 36) and mobile (37, 38) elements, the mobile elements (37, 38) being built into the bottom of each door (1, 2) and connected to the fixed elements by locking means that are identical to those used to connect the elements of the first ring (3).

## Patentansprüche

1. Vorrichtung zur Verstärkung eines Fahrzeugs, insbesondere wenn es mit einem einfahrbaren aus steifen Elementen (5, 6, 7) bestehenden Dach ausgerüstet ist, die an den feststehenden Teilen der Karosserie befestigt sind, und aus beweglichen Elementen (8, 9), die im oberen Teil der Türen (1, 2) des Fahrzeugs eingebunden sind, wobei sich diese beweglichen Elemente (8, 9) in der Verlängerung der feststehenden Elemente (5, 6, 7) befinden, wenn die Türen (1, 2) geschlossen sind, wobei jedes bewegliche Element (8, 9) an beiden Enden Mittel zur Verriegelung umfaßt, die zwischen einer Entriegelungsposition und einer Verriegelungsposition beweglich sind, in der die beweglichen Elemente (8) steif mit den feststehenden Elementen (5) verbunden sind und gemeinsam einen Verstärkungsstab bilden, der sich über die gesamte Länge des Fahrgastraums erstreckt, dessen Steifigkeit gleichmäßig über die gesamte Länge des besagten Stabs verteilt ist, wobei die besagte Vorrichtung **dadurch gekennzeichnet ist, daß**, wenn die Verriegelungsmittel in ihrer Verriegelungsposition sind, die beweglichen Elemente (8, 9) und die feststehenden Elemente (5, 6, 7) gemeinsam einen steifen Ring (3) bilden, der den Fahrgastraum des Fahrzeugs umgibt, und dessen Steifigkeit gleichmäßig um den gesamten Fahrgastraum (4) des Fahrzeugs herum verteilt ist.

2. Vorrichtung nach Anspruch 1 für ein viertüriges Fahrzeug, **dadurch gekennzeichnet, daß** der Ring (3) ein vorderes feststehendes Element (5) in Form eines Bogens und ein hinteres feststehenden Element(6) in Form eines Bogens umfaßt, wobei sich ein seitliches feststehendes Element (7) von jeder Seite des Fahrzeugs erstreckt und zwischen zwei beweglichen Elementen (8, 9) inbegriffen ist, die in den beiden Türen (1, 2) eingebunden sind, wobei jedes dieser beiden Elemente (8, 9) an ein Ende eines Elements in Form eines Bogens (5, 6) anschließt.

3. Vorrichtung nach einem der vorstehenden Ansprüche 1 oder 2, **dadurch gekennzeichnet, daß** die Verriegelungsmittel Mittel umfassen, mit denen die Elemente (5, 8; 7, 9, 6) jeweils den anderen gegenüber zentriert werden können, und Mittel zum Festziehen der Endflächen (5a, 8a) der Elemente aneinander.

4. Vorrichtung nach einem der vorstehenden Ansprüche 1 bis 3, **dadurch gekennzeichnet, daß** die besagten Elemente rohrförmig sind.

5. Vorrichtung nach einem der vorstehenden Ansprüche 3 oder 4, **dadurch gekennzeichnet, daß** die Verriegelungsmittel einen Schlitten (10) umfassen, der gleitend in einer Bohrung (11) montiert ist, die in einem (8) der Elemente ausgeführt ist und an ihrem Ende einen Kegel (12) trägt, der in Verriegelungsposition der Endfläche (8a) des besagten Elements (8) einen Vorsprung bildet, um in eine ergänzende Ausnehmung (13) einzugreifen, die in der Endfläche (5a) des anderen Elements (5) ausgeführt ist.

6. Vorrichtung nach Anspruch 5, **dadurch gekennzeichnet, daß** die besagte Bohrung (11) mindestens eine axiale Nut umfaßt, in der ein mit dem Schlitten (10) fest verbundener Keil (14) sitzt, um das Gleiten dieses Schlittens (10) axial zu führen und in Drehung zu sperren.

7. Vorrichtung nach einem der vorstehenden Ansprüche 5 oder 6, **dadurch gekennzeichnet, daß** das Gleiten des Schlittens (10) von einer Welle (15) gesteuert wird, die sich axial im Element (8) erstreckt und ein Ende mit Außengewinde (16) aufweist, das in ein Innengewinde (17) eingreift, das im Schlitten (10) ausgeführt ist, wobei die besagte Welle (15) an einen Elektromotor (18) gekoppelt ist, um sie in Drehung zu versetzen.

8. Vorrichtung nach einem der vorstehenden Ansprüche 4 bis 7, **dadurch gekennzeichnet, daß** die Verriegelungsmittel außerdem mindestens eine Spannbacke (21) umfassen, die schwenkbar in einer Aussparung (22) des besagten Kegels (12) nach einer Achse (23) montiert ist, die senkrecht zur Achse (24) des Schlittens (10) verläuft, wobei die besagte Spannbacke (21) an jedem Ende einen vorspringenden Bereich (25, 26) in einer zur Achse (24) des Schlittens (10) entgegengesetzten Richtung umfaßt, wobei jedes Element (8, 5) in seinem Innern in Nähe seiner Endfläche (8a, 5a) eine geneigte Rampe (27, 28) umfaßt, wobei die besagten geneigten Rampen mit den besagten vorspringenden Bereichen (25, 26) der besagten Spannbacke (21) so zusammenarbeiten, daß beim Eingreifen des Kegels (12) in die Ausnehmung (13) des anschließenden Elements (5) die Auflage des hinten an der Spannbacke (21) liegenden Bereichs (26) auf der entsprechenden Rampe (27) das Schwenken der Spannbacke (21) und die Auflage ihres vorne liegenden Bereichs (25) gegen die Rampe (28) des anschließenden Elements (5) auslöst.

9. Vorrichtung nach Anspruch 8, **dadurch gekennzeichnet, daß** sie eine zweite Spannbacke (21a) umfaßt, die auf der gleichen Achse (23) montiert ist und mit den geneigten Rampen (27a, 28a) zusammenarbeitet, die im Verhältnis zu denjenigen symmetrisch angeordnet sind, die mit der ersten Spannbacke (21) zusammenarbeiten.

10. Vorrichtung nach Anspruch 9, **dadurch gekennzeichnet, daß** jede Spannbacke (21, 21a) mit einer Feder (29) zusammenarbeitet, die versucht, die Spannbacke zu einer Position schwenken zu lassen, die derjenigen der besagten Rampen entgegengesetzt liegt.

11. Vorrichtung nach einem der vorstehenden Ansprüche 9 oder 10, **dadurch gekennzeichnet, daß** eines (5) der Elemente an seinem Ende eine Muffe (30) umfaßt, die im Innern des besagten Elements (5) verstellbar befestigt ist, um die Position seiner Endfläche (5a) axial justieren zu können, wobei die Innenfläche der besagten Muffe die besagten geneigten Rampen (28, 28a) trägt.

12. Vorrichtung nach einem der vorstehenden Ansprüche 1 bis 11, **dadurch gekennzeichnet, daß** sie einen zweiten steifen Ring (33) parallel zum ersten Ring (3) umfaßt, der aus feststehenden Elementen (34, 35, 36) und beweglichen Elementen (37, 38) besteht, wobei die beweglichen Elemente (37, 38) im unteren Teil jeder Tür (1, 2) eingebunden und mit den feststehenden Elementen durch Verriegelungsmittel verbunden sind, die identisch mit denjenigen sind, die die Elemente des ersten Rings (3) verbinden.
